# EUROPÄISCHE PATENTSCHRIFT

(11) **EP 4 504 567 B1**
(45) Veröffentlichungstag und Bekanntmachung des Hinweises auf die Patenterteilung: **27.05.2026**
(21) Anmeldenummer: 23717479.2
(22) Anmeldetag: 04.04.2023
(51) Int. Cl.: B60R 22/48

(54) **GURTAUFROLLER MIT EINER EINRICHTUNG ZUR SENSIERUNG DER GURTBANDAUSZUGSLÄNGE**
BELT RETRACTOR HAVING A DEVICE FOR SENSING THE EXTENSION LENGTH OF THE BELT STRAP
ENROULEUR DE CEINTURE AYANT UN DISPOSITIF POUR DÉTECTER LA LONGUEUR D'EXTENSION DE LA SANGLE DE CEINTURE

(30) Priorität: 07.04.2022 DE 102022108446
(43) Veröffentlichungstag der Anmeldung: 12.02.2025
(73) Patentinhaber: Autoliv Development AB, 447 83 Vårgårda (SE)
(72) Erfinder: FYHR, Fredrik, 44734 Vargarda (SE); LARSSON, Linus, 44143 Alingsas (SE); MATHIASSON, Elias, 44192 Alingsas (DE)
(74) Vertreter: Müller Verweyen
(86) Internationale Anmeldenummer: PCT/EP2023/058764
(87) Internationale Veröffentlichungsnummer: WO 2023/194345

(56) Entgegenhaltungen:
- DE-A1- 102015 007 555
- DE-A1- 102017 223 235
- DE-A1- 102018 113 582
- DE-A1- 102020 109 041
- DE-C2- 4 132 876
- JP-A- 2019 085 090
- US-A1- 2008 012 285

## Beschreibung

Die Erfindung betrifft einen Gurtaufroller mit einer Einrichtung zur Sensierung der Gurtbandauszugslänge mit den Merkmalen des Oberbegriffs von Anspruch 1.

Gurtaufroller werden z.B. in Sicherheitsgurtsystemen von Kraftfahrzeugen verwendet, welche den Insassen im Unfall zurückhalten und verhindern, dass der Insasse im Unfall auf harte Oberflächen, wie z.B. die Windschutzscheibe, trifft und sich dadurch schwerwiegende Verletzungen zuzieht. Ferner sind solche Gurtaufroller in modernen Kraftfahrzeugen mit irreversiblen oder reversiblen Gurtstraffern versehen, welche im Unfall oder in einer Vorunfallphase in dem Sicherheitsgurtsystem vorhandene Gurtlose herausziehen und dadurch die Koppelung des Insassen an das Kraftfahrzeug weiter verbessern. Insbesondere bei reversiblen Gurtstraffern, welche z.B. einen Elektromotor aufweisen, der die Gurtwelle in Aufrollrichtung antreibt, kann die erzeugte Gurtkraft gesteuert werden, so dass in Abhängigkeit von dem Insassentyp, von der Sitzstellung oder der Gurtbandauszugslänge eine unterschiedliche Gurtkraft erzeugt werden kann. Hierbei ist die Gurtbandauszugslänge von besonderer Bedeutung, da die ermittelte Gurtbandauszugslänge auch dazu verwendet werden kann, um bestimmte Zustände des Sicherheitsgurtsystems zu erkennen, wie z.B. "der Insasse hat gerade den Gurt angelegt" oder "der Insasse hat gerade den Gurt abgelegt". In den genannten Fällen kann es sinnvoll sein, die Gurtkraft kurzzeitig zu erhöhen, um den Gurt in eine Parkposition aufzurollen oder beim Anschnallen erzeugte Gurtlose wieder herauszuziehen. Ferner sind Gurtaufroller bekannt, welche eine pyrotechnische Vorstraffeinrichtung aufweisen, die nur bei angelegtem Gurt im Unfall ausgelöst werden soll. Auch in diesem Fall ist es wichtig den Anschnallzustand zu ermitteln.

Ein weiteres Problem bei Gurtaufrollern ist, dass die Gurtaufroller bei schnellem Gurtbandeinlauf ungewollt blockieren können. Zur Überwindung dieses Problems sind verschiedene Systeme bekannt, welche das Sensorsystem in Abhängigkeit von dem Unterschreiten einer vorbestimmten Gurtbandauszugslänge beim Gurtbandeinlauf abschalten. Auch bei Gurtaufrollern mit einer ELR/ALR Funktion erfolgt die Umschaltung aus dem ELR in den ALR Betrieb in Abhängigkeit von dem Überschreiten einer vorbestimmten Gurtbandauszugslänge. Ferner sind moderne Gurtaufroller mit einer zwischen zwei oder mehreren Kraftbegrenzungsniveaus bekannt, bei denen das Kraftbegrenzungsniveau in Abhängigkeit von der ausgezogenen Gurtbandauszugslänge umschaltbar ist.

Es kann daher aus verschiedenen Gründen sinnvoll sein, die Gurtbandauszugslänge zu sensieren, wobei die Genauigkeit der Sensierung dabei von besonderer Bedeutung ist, da es sich bei dem Gurtaufroller um ein sicherheitsrelevantes Bauteil handelt und eine Fehlsteuerung zu erheblichen Schäden führen kann.

Aus der DE 41 32 876 C2 ist z.B. ein Gurtaufroller bekannt, der eine mechanische Einrichtung aufweist, welche eine vorbestimmte Gurtbandauszugslänge sensiert und bei Überschreiten der Gurtbandauszugslänge den Gurtaufroller aus einem ELR-Betrieb in einen ALR-Betrieb umschaltet. Die Einrichtung umfasst ein mechanisches Zählgetriebe, das den Gurtaufroller bei Überschreiten des vorgegebenen Schaltpunktes über eine Schaltwippe mechanisch umschaltet. Da es sich bei dieser Lösung um eine mechanische Einrichtung mit verschiedenen ineinandergreifenden Teilen handelt, ist eine Verbesserung der Genauigkeit der Sensierung nur mit einer aufwendigen sehr hohen Fertigungsgenauigkeit zu erreichen. Ferner muss bei dieser Lösung für jede zu sensierende Gurtbandauszugslänge ein Schaltnocken vorgesehen werden, so dass nicht beliebig viele Gurtbandauszugslängen sensiert werden können, und jede zu sensierende Gurtbandauszugslänge einen konstruktiven Aufwand darstellt. Aus der Druckschrift DE 10 2018 113 582 A1 ist ein Sicherheitsgurtsystem mit einem Gurtaufroller bekannt, bei dem an dem Gurtaufroller ein Gurtspulenwinkelsensor vorgesehen ist, welcher einen Drehwinkelgeber, einen Drehwinkelsensor und ein mehrstufiges Untersetzungsgetriebe umfasst. Aufgrund des Untersetzungsgetriebes wird die Drehbewegung der Gurtwelle in eine geringere Drehzahl des Drehwinkelgebers untersetzt, wodurch wiederum die Sensierung der absoluten Auszugslänge des Sicherheitsgurtes ermöglicht wird.

Aus der Druckschrift DE 10 2015 007 555 A1 ist eine Vorrichtung zur Bestimmung des Drehwinkels einer Gurtspule bekannt, welche ein Getriebe zur Über- oder Untersetzung der Drehbewegung der Gurtspule aufweist, welches ein darüber gekoppeltes Drehelement umfasst, dessen Drehbewegung mittels einer zugeordneten Messeinrichtung erfasst wird. Die Druckschrift DE 10 2015 007 555 A1 offenbart einen Gurtaufroller gemäß dem Oberbegriff des Anspruchs 1.

Ferner sind aus den Druckschriften DE 10 2020 109 041 A1 und US 2008/012285 A1 weitere Gurtaufroller mit einer die Drehbewegung der Gurtspule erfassenden Messeinrichtung bekannt.

Vor diesem Hintergrund liegt der Erfindung die Aufgabe zugrunde, einen Gurtaufroller mit einer Einrichtung zur Sensierung der Gurtbandauszugslänge bereitzustellen, welcher einen möglichst einfachen konstruktiven Aufbau aufweisen und eine genaue Erfassung der Drehbewegung der Gurtspule ermöglichen soll.

Zur Lösung der Aufgabe wird ein Gurtaufroller mit den Merkmalen von Anspruch 1 vorgeschlagen. Weitere bevorzugte Weiterbildungen der Erfindung sind den Unteransprüchen, den Figuren und der zugehörigen Beschreibung zu entnehmen.

Gemäß dem Grundgedanken der Erfindung wird vorgeschlagen, dass der Gurtaufroller eine an dem Rahmen gehaltene erste Gehäusekappe aufweist, und das Untersetzungsgetriebe wenigstens ein an einem Lagerzapfen der Gehäusekappe drehbar gelagertes Zahnrad aufweist, und eine zweite Gehäusekappe vorgesehen ist, welche das Untersetzungsgetriebe zur Außenseite hin abdeckt, und an der der erste und/oder der zweite Drehwinkelsensor befestigt sind. Dies kann das Antriebszahnrad, das Abtriebszahnrad oder auch ein drittes Zwischenzahnrad sein, je nachdem wie viele Zahnräder das Untersetzungsgetriebe aufweist, und wie es aufgebaut ist. Durch die Lagerung des Zahnrades an der rahmenfesten Gehäusekappe ist das Zahnrad drehbar gelagert und gleichzeitig rahmenfest in einer festen räumlichen Zuordnung zu der Gurtwelle und den mit dieser zusammenwirkenden Teilen wie z.B. deren Fortsatz zum Antrieb des Antriebsrades fixiert. Die zweite Gehäusekappe deckt das Untersetzungsgetriebe zur Außenseite hin ab und bildet damit einen Schutz für das Untersetzungsgetriebe vor äußeren Einwirkungen. Gleichzeitig dient es durch die Befestigung des ersten und/oder zweiten Drehwinkelsensors zusätzlich zur Fixierung der Drehwinkelsensoren gegenüber dem Untersetzungsgetriebe und den daran gehaltenen Drehwinkelgebern.

Weiter wird vorgeschlagen, dass der zweite Drehwinkelgeber an einem Zahnrad des Untersetzungsgetriebes angeordnet ist. Das Untersetzungsgetriebe ist zur Untersetzung der Drehbewegung der Gurtwelle für den ersten Drehwinkelsensor vorgesehen. Dieses ohnehin vorgesehene Untersetzungsgetriebe wird nun zur Verwirklichung einer kostengünstigen kompakten Bauweise zusätzlich zur Anordnung des zweiten Drehwinkelgebers genutzt. Dabei kann die unterschiedliche Drehzahl des zweiten Drehwinkelgebers sehr einfach verwirklicht werden, indem der zweite Drehwinkelgeber an einem Zahnrad des Untersetzungsgetriebes angeordnet ist, welches zwischen dem ersten Drehwinkelgeber und der Gurtwelle angeordnet ist und mit einer höheren Drehzahl als der erste Drehwinkelgeber dreht.

Eine besonders große und einfach zu verwirklichende Drehzahldifferenz des zweiten Drehwinkelgebers zu dem ersten Drehwinkelgeber kann dabei dadurch verwirklicht werden, indem dass das Zahnrad des Untersetzungsgetriebes, an dem der zweite Drehwinkelgeber angerordnet ist, ein drehfest mit der Gurtwelle verbundenes Antriebszahnrad des Untersetzungsgetriebes ist. Der zweite Drehwinkelgeber dreht damit mit einer identischen Drehzahl wie die Gurtwelle, so dass das Signal des zweiten Drehwinkelsensors unmittelbar mit der Drehbewegung der Gurtwelle korreliert und diese 1:1 abbildet.

Weiter wird vorgeschlagen, dass das Untersetzungsgetriebe ein an dem Gurtaufroller ortsfest angeordnetes, drehbar gelagertes Abtriebszahnrad aufweist, und der erste Drehwinkelgeber an dem Abtriebszahnrad angeordnet ist. Durch die vorgeschlagene Weiterentwicklung führt der erste Drehwinkelgeber abgesehen von seiner Drehbewegung um seine Drehachse keine weitere Bewegung aus, und der Drehwinkelsensor kann ortsfest zu dem ersten Drehwinkelgeber angeordnet werden. Hierdurch kann ein vereinfachter kompakter Aufbau bei einer gleichzeitig genauen Sensierung der Drehbewegung des ersten Drehwinkelgebers verwirklicht werden.

Weiter wird vorgeschlagen, dass ein zwischen dem Antriebszahnrad und dem Abtriebszahnrad angeordnetes Zwischenzahnrad vorgesehen ist, und das Zwischenzahnrad durch ein zweistufiges Zahnrad mit zwei Verzahnungen mit unterschiedlichen Durchmessern und einer unterschiedlichen Zähnezahl gebildet ist, welches mit der Verzahnung mit der größeren Zähnezahl mit der Verzahnung des Antriebszahnrades und mit der Verzahnung mit der kleineren Zähnezahl mit der Verzahnung des Abtriebszahnrades kämmt. Das Zwischenrad bildet damit eine zweistufige Untersetzung der Drehbewegung des Antriebszahnrades auf das Abtriebszahnrad in einer sehr kompakten Bauweise aus.

Weiter wird vorgeschlagen, dass die zweite Gehäusekappe mindestens eine Öffnung aufweist, welche den ersten Drehwinkelgeber und/oder den zweiten Drehwinkelgeber freilegt und durch den ersten und/oder den zweiten Drehwinkelsensor abgedeckt ist. Durch die Öffnung wird der jeweilige Drehwinkelgeber freigelegt, so dass dieser von außen frei zugänglich ist. Die Öffnung wird dann durch den jeweiligen Drehwinkelsensor wieder abgedeckt, so dass zwischen dem Drehwinkelgeber und dem Drehwinkelsensor keine das Signal beeinträchtigende Wandung vorgesehen ist, und der Drehwinkelgeber und der Drehwinkelsensor signaltechnisch unmittelbar zusammenwirken.

Dabei wird weiter vorgeschlagen, dass die Öffnung als Langlochöffnung ausgebildet ist. Die Langlochöffnung ist insofern von Vorteil, da dadurch Fertigungsungenauigkeiten ausgeglichen werden können.

Dabei kann die zweite Gehäusekappe bevorzugt an der ersten Gehäusekappe oder an einem fest mit dieser verbundenem Teil befestigt sein. Damit kann durch die Befestigungskette der ersten und zweiten Gehäusekappe eine feste räumliche Zuordnung der Drehwinkelsensoren zu den Drehwinkelgebern verwirklicht werden, so dass die Drehwinkelsensoren nach der Montage allein durch ihre Befestigung an der zweiten Gehäusekappe zu den an der ersten Gehäusekappe gehaltenen Drehwinkelgebern ausgerichtet sind, ohne dass sie zusätzlich justiert oder ausgerichtet werden müssen.

Weiter wird vorgeschlagen, dass das Untersetzungsgetriebe die Drehbewegung der Gurtwelle soweit untersetzt, dass der erste Drehwinkelgeber von der Drehwinkelstellung der Gurtwelle bei vollständig aufgewickeltem Sicherheitsgurt bis zu der Drehwinkelstellung der Gurtwelle bei einem vollständig ausgezogenen Sicherheitsgurt um weniger als eine Umdrehung um seine Drehachse dreht. Durch die vorgeschlagene Lösung kann die Auszugslänge des Sicherheitsgurtes eindeutig sensiert werden, da jede Drehwinkelstellung des Drehwinkelgebers genau einer Auszugslänge des Sicherheitsgurtes zuzuordnen ist.

Hierzu kann das Untersetzungsgetriebe bevorzugt ein Untersetzungsverhältnis von wenigstens 1:5 aufweisen. Die Gurtwelle führt damit wenigstens fünf Umdrehungen aus, während der Drehwinkelgeber eine Umdrehung ausführt. Die fünf Umdrehungen entsprechen einer Auszugslänge des Sicherheitsgurtes von wenigstens 750 mm, welche der minimalen Auszugslänge des Sicherheitsgurtes entspricht, die der Insasse im Mittel während des Anschnallvorganges auszieht.

Die Erfindung wird im Folgenden anhand von zwei bevorzugten Ausführungsformen unter Bezugnahme auf die beigefügten Figuren erläutert. Dabei zeigt
- Fig. 1: einen erfindungsgemäßen Gurtaufroller nach einem ersten Ausführungsbeispiel in Schrägansicht; und
- Fig. 2: eine Schnittdarstellung des Gurtaufrollers der Figur 5 in Schnittrichtung A-A; und
- Fig. 3: die erste Gehäusekappe mit dem Untersetzungsgetriebe des Gurtaufrollers der Figur 1 in Frontalansicht;
- Fig. 4: die erste Gehäusekappe mit dem Untersetzungsgetriebe des Gurtaufrollers der Figur 1 in Schrägansicht; und
- Fig. 5: den Gurtaufroller der Figur 1 ohne Drehwinkelsensoren
- Fig. 6: einen erfindungsgemäßen Gurtaufroller nach einem zweiten Ausführungsbeispiel; und
- Fig. 7: das Signalbild des Gurtaufrollers der Figur 6.

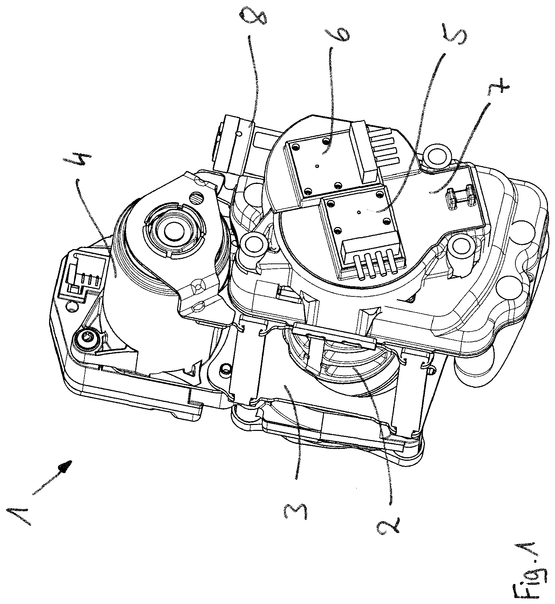

In der Figur 1 ist ein erfindungsgemäßer Gurtaufroller 1 mit einem fahrzeugfest befestigbaren Rahmen 3 und einer darin drehbar gelagerten Gurtwelle 2 zu erkennen. Auf der Gurtwelle 2 ist ein nicht dargestellter Sicherheitsgurt aufwickelbar, wie dies im Stand der Technik seit langem bekannt ist. Ferner ist an dem Gurtaufroller 1 ein reversibler Gurtstraffer 4 und ein irreversibler pyrotechnischer Gurtstraffer 8 vorgesehen.

Ferner ist der Gurtaufroller 1 zu einer Seite hin nach außen durch eine zweite Gehäusekappe 7 abgedeckt, an welcher, wie nachfolgend noch näher erläutert wird, ein erster Drehwinkelsensor 6 und ein zweiter Drehwinkelsensor 5 gehalten sind, welche beide als Hallsensoren ausgebildet sind.

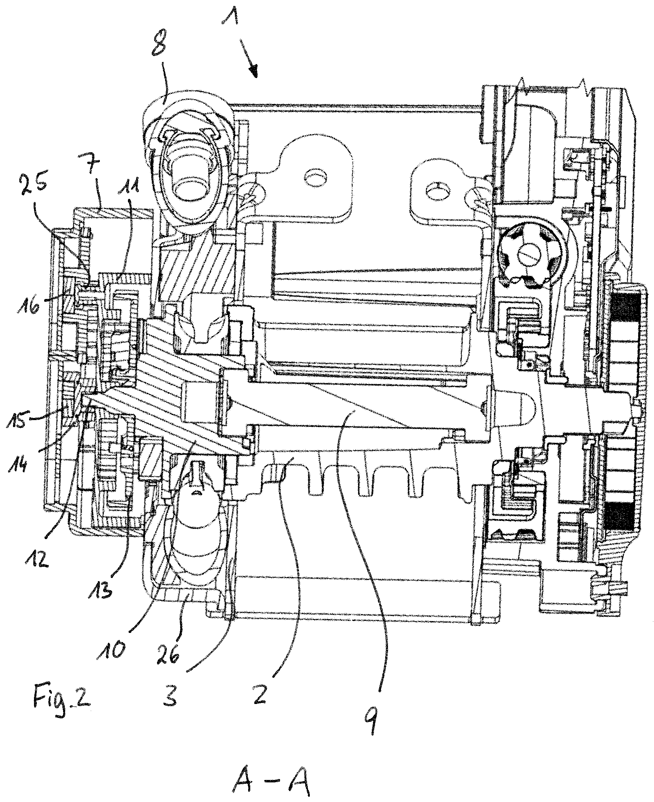

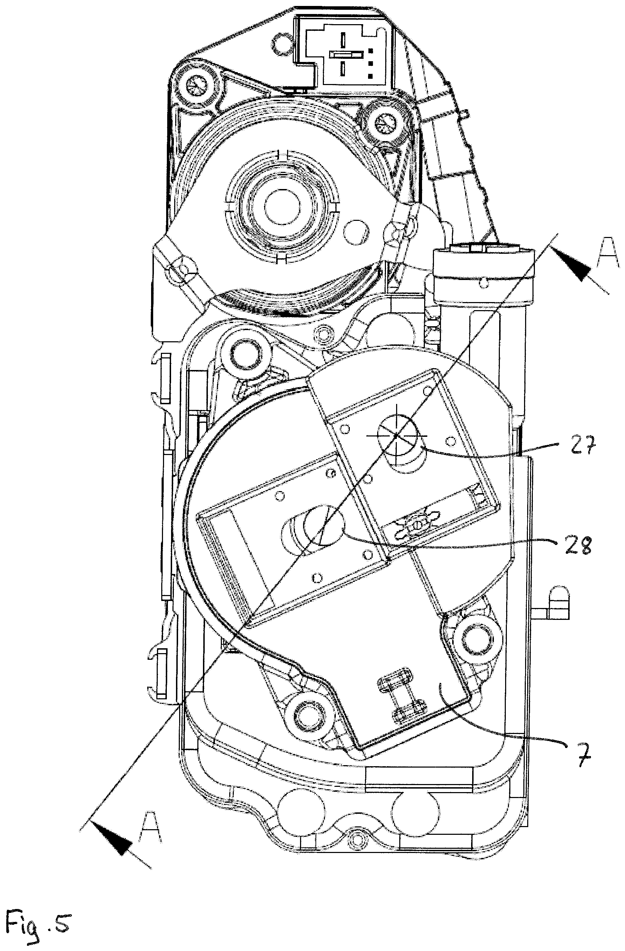

In der Figur 2 ist derselbe in der Figur 5 gezeigte Gurtaufroller 1 in einer vergrößerten Schnittdarstellung entlang der Schnittrichtung A-A zu erkennen. Der irreversible Gurtstraffer 8 weist ein Antriebsrad 10 auf, welches drehfest mit einem Ende eines Torsionsstabes 9 verbunden ist, der seinerseits mit seinem anderen Ende drehfest mit der Gurtwelle 2 verbunden ist. Das Antriebsrad 10, der Torsionsstab 9 und die Gurtwelle 2 bilden bis zur Aktivierung des Torsionstabes 9 einen drehfesten Verbund also eine Einheit. An dem Antriebsrad 10 ist ferner eine Blockierklinke und eine Steuerscheibe 13 gelagert, welche zusammen die Blockiereinrichtung des Gurtaufrollers 1 bilden. Das Antriebsrad 10 des irreversiblen Gurtstraffers 8 ist zusammen mit der Antriebseinheit durch ein Straffergehäuse 26 zur Außenseite hin abgedeckt, welches an dem Rahmen 3 des Gurtaufrollers 1 befestigt ist. Die an dem Antriebsrad 10 drehbar gelagerte Steuerscheibe 13 ist durch eine erste Gehäusekappe 11 zur Außenseite hin abgedeckt, welche ihrerseits an dem Straffergehäuse 26 des irreversiblen Gurtstraffers 8 und damit rahmenfest befestigt ist.

An dem Antriebsrad 10 ist ein axialer Fortsatz 12 vorgesehen, welcher aufgrund der oben beschriebenen drehfesten Verbindung mit der Gurtwelle 2 auch als ein drehfester Fortsatz 12 der Gurtwelle 2 angesehen werden kann. Der Fortsatz 12 ist koaxial zu der Drehachse der Gurtwelle 2 angeordnet und durchgreift eine zentrale Öffnung in der ersten Gehäusekappe 11.

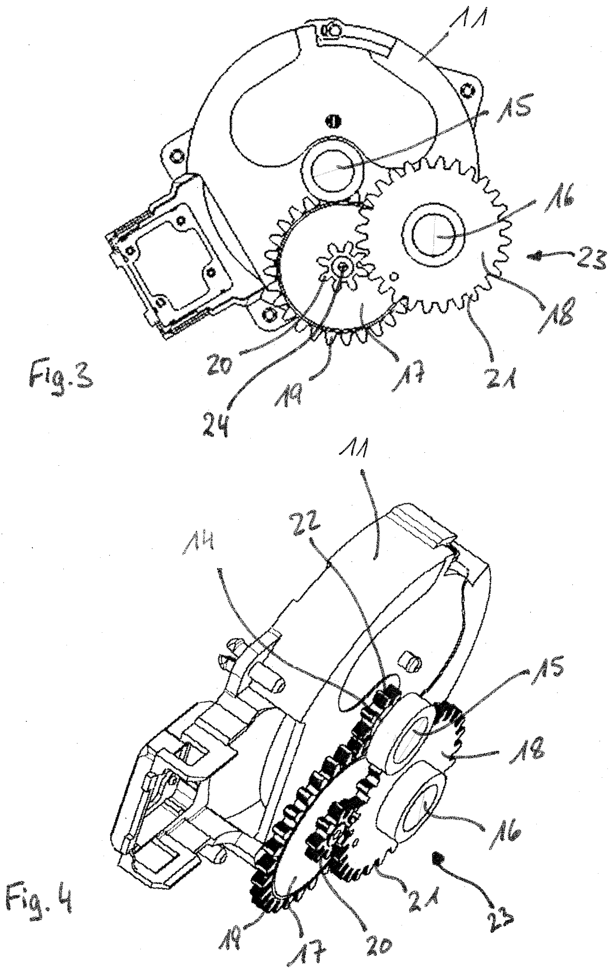

Auf dem die erste Gehäusekappe 11 durchgreifenden Ende des Fortsatzes 12 ist ein Antriebszahnrad 14 eines in den Figuren 3 und 4 vergrößert zu erkennenden Untersetzungsgetriebes 23 drehfest gehalten. Das Untersetzungsgetriebe 23 umfasst neben dem Antriebszahnrad 14, ein Zwischenzahnrad 17 und ein Abtriebszahnrad 18. Das Zwischenzahnrad 17 und das Abtriebszahnrad 18 sind jeweils auf Lagerzapfen 24 und 25 der ersten Gehäusekappe 11 drehbar gelagert und ortsfest festgelegt (siehe Figur 2 und 3).

Das Antriebszahnrad 14 weist eine Verzahnung 22 auf, während das Zwischenzahnrad 17 zwei Verzahnungen 19 und 20 und das Abtriebszahnrad 18 wiederum eine Verzahnung 21 aufweist. Das Zwischenzahnrad 17 weist damit eine zweistufige Verzahnung mit einer Verzahnung 19 auf einem größeren Außendurchmesser mit 28 Zähnen und eine Verzahnung 20 auf einem kleineren Durchmesser mit 8 Zähnen auf. Die Verzahnung 22 des Antriebszahnrades 14 weist 8 Zähne und die Verzahnung 21 des Abtriebszahnrades 18 weist 28 Zähne auf. Die Verzahnung 22 des Antriebszahnrades 14 weist eine identische Zähnezahl und einen identischen Durchmesser wie die Verzahnung 20 des Zwischenzahnrades 17 mit der kleineren Zähnezahl auf. Die Verzahnung 21 des Abtriebszahnrades 18 weist eine identische Zähnezahl und einen identischen Durchmesser wie die Verzahnung 19 des Zwischenzahnrades 17 mit der größeren Zähnezahl auf.

Das Antriebszahnrad 14 kämmt mit seiner Verzahnung 22 in der Verzahnung 19 des Zwischenzahnrades 17 mit der größeren Zähnezahl, während das Abtriebszahnrad 18 mit seiner Verzahnung 21 in der Verzahnung 20 des Zwischenzahnrades 17 mit der kleineren Zähnezahl kämmt. Damit ergibt sich eine zweifache Untersetzung der Drehbewegung der Gurtwelle 2 zunächst in einer ersten Stufe in eine geringere Drehzahl des Zwischenzahnrades 17 im Verhältnis von 8/28 und weiter in einer zweiten Stufe in einer weiter reduzierten Drehzahl des Abtriebszahnrades 18 wiederum im Verhältnis von 8/28. Damit ergibt sich insgesamt eine Untersetzung der Drehbewegung der Gurtwelle 2 auf das Abtriebszahnrad 18 in einem Verhältnis von 1/12,25. Anders ausgedrückt folgt daraus, dass das Abtriebszahnrad 18 eine Umdrehung ausgeführt hat, wenn die Gurtwelle 12,25 Umdrehungen ausgeführt hat.

Auf dem Abtriebszahnrad 18 ist ein erster Drehwinkelgeber 16 in Form eines zweipoligen Magneten vorgesehen, welcher aufgrund seiner festen Anordnung an dem Abtriebszahnrad 18 bei der Drehbewegung des Abtriebszahnrades 18 eine identische Drehbewegung ausführt also während der 12,25 Umdrehungen der Gurtwelle 2 ebenfalls eine Umdrehung ausführt. Ferner ist an dem Antriebszahnrad 14 ein zweiter Drehwinkelgeber 15 ebenfalls in Form eines zweipoligen Magneten drehfest gehalten, welcher aufgrund der drehfesten Verbindung eine zu der Drehbewegung des Antriebszahnrades 14 identische Drehbewegung ausführt, welche aufgrund der oben beschriebenen drehfesten Verbindung des Antriebszahnrades 14 mit der Gurtwelle 2 der Drehbewegung der Gurtwelle 2 entspricht. Der erste Drehwinkelgeber 16 und der zweite Drehwinkelgeber 15 sind vorzugsweise identisch. Ferner sind die Verzahnungen 22 und 20 mit den geringeren Zähnezahlen und die Verzahnungen 19 und 21 mit den größeren Zähnezahlen ebenfalls identisch. Der erste Drehwinkelgeber 16 ist drehfest mit dem Abtriebszahnrad 18 verbunden und ist hierzu in einer formkorrespondierenden Ausnehmung drehfest fixiert. Hierzu kann der erste Drehwinkelgeber 16 in der Ausnehmung verklebt, formschlüssig verbunden, eingepresst oder auch durch einen Spritzvorgang des Abtriebszahnrades 18 drehfest festgelegt sein. In gleicher Weise kann auch der zweite Drehwinkelgeber 15 in einer Ausnehmung des Antriebszahnrades 14 festgelegt sein.

An dem Straffergehäuse 26 ist ferner eine rahmenfest fixierte zweite Gehäusekappe 7 gehalten, welche Träger des ersten Drehwinkelsensors 6 und des zweiten Drehwinkelsensors 5 ist. Der erste Drehwinkelsensor 6 ist mittels einer Halterung so an der zweiten Gehäusekappe 7 positioniert, dass dessen Sensorfläche dem ersten Drehwinkelgeber 16 gegenüberliegt, so dass die Drehbewegung des ersten Drehwinkelgebers 16 zu einem Signal in dem ersten Drehwinkelsensor 6 führt. Der zweite Drehwinkelsensor 5 ist ebenfalls mittels einer Halterung so positioniert, dass dessen Sensorfläche dem zweiten Drehwinkelgeber 15 gegenüberliegt, so dass die Drehbewegung des zweiten Drehwinkelgebers 15 zu einem Signal in dem zweiten Drehwinkelsensor 5 führt. Zur Befestigung der Drehwinkelsensoren 5 und 6 sind an der zweiten Gehäusekappe 7 zwei Aufnahmen vorgesehen, in denen die Drehwinkelsensoren 5 und 6 mit ihren Halterungen befestigt sind.

Da der zweite Drehwinkelgeber 15 an dem koaxial zu der Drehachse der Gurtwelle 2 angeordneten Antriebszahnrad 14 angeordnet ist, ist der zweite Drehwinkelsensor 5 ebenfalls zentrisch also mittig an der zweiten Gehäusekappe 7 in einer Überdeckung der Drehachse der Gurtwelle 2 angeordnet. Das Straffergehäuse 26 ist fest an dem Rahmen 3 des Gurtaufrollers 1 gehalten und bildet die Befestigungsfläche für die erste Gehäusekappe 11. Gleichzeitig bildet das Straffergehäuse 26 die Befestigungsfläche für die zweite Gehäusekappe 7. Damit sind die erste Gehäusekappe 11 und die zweite Gehäusekappe 7 beide rahmenfest befestigt. Ferner sind die beiden Gehäusekappen 11 und 7 beide an demselben Teil nämlich dem Straffergehäuse 26 befestigt, so dass sie in einer festen räumlichen Zuordnung zueinander fixiert sind, wobei das Straffergehäuse 26 die gemeinsame Basis bildet. Da das Abtriebszahnrad 18 mit dem darauf angeordneten ersten Drehwinkelgeber 16 auf dem Lagerzapfen 25 der ersten Gehäusekappe 11 und der erste Drehwinkelsensor 6 an der zweiten Gehäusekappe 7 gehalten ist, ist der erste Drehwinkelsensor 6 allein durch die Befestigung der zweiten Gehäusekappe 7 in einer festen räumlichen Zuordnung zu dem ersten Drehwinkelgeber 16. Ferner ist die Gurtwelle 2 in dem Rahmen 3 gelagert, an dem auch die zweite Gehäusekappe 7 mittelbar über das Straffergehäuse 26 befestigt ist. Damit befindet sich die Gurtwelle 2 mit dem Antriebsrad 10 und dem Fortsatz 12 einschließlich des darauf angeordneten Antriebszahnrades 14 und des zweiten Drehwinkelgebers 15 in einer festen räumlichen Zuordnung zu der zweiten Gehäusekappe 7 und dem daran gehaltenen zweiten Drehwinkelsensor 5.

Aufgrund der unterschiedlichen Zuordnung der beiden Drehwinkelgeber 15 und 16 in dem Untersetzungsgetriebe 23 führen diese unterschiedliche Drehbewegungen aus. Dabei führt der erste Drehwinkelgeber 16 die oben beschriebene untersetzte Drehbewegung mit maximal einer Umdrehung ausgehend von dem vollständig aufgewickelten Sicherheitsgurt bis zu dem vollständigen Abwickeln des Sicherheitsgurtes aus. Damit erzeugt der erste Drehwinkelsensor 6 ein unmittelbar zu der Auszugslänge des Sicherheitsgurtes korrelierendes Signal. Der zweite Drehwinkelgeber 15 ist an dem Antriebszahnrad 14 gehalten und dreht damit mit einer zu der Gurtwelle 2 identischen nicht untersetzten Drehbewegung. Der zweite Drehwinkelgeber 15 dreht damit deutlich schneller und mit einer höheren Drehzahl als der erste Drehwinkelgeber 16, so dass der zweite Drehwinkelsensor 5 ein zweites die Drehbewegung der Gurtwelle 2 höher auflösendes Signal liefert, welches in Kombination mit dem Signal des ersten Drehwinkelsensors 6 nicht nur eine Sensierung der Auszugslänge sondern darüber hinaus auch eine genauere Sensierung des Drehwinkels der Gurtwelle 2 ermöglicht. In dem vorliegenden Fall dreht der zweite Drehwinkelgeber 15 sogar mit einer identischen Drehzahl wie die Gurtwelle 2, so dass das Signal des zweiten Drehwinkelsensors 5 die Drehbewegung der Gurtwelle 2 sogar unmittelbar 1:1 abbildet.

In der Figur 5 ist der erfindungsgemäße Gurtaufroller 1 entsprechend der Darstellung der Figur 1 ohne die Drehwinkelsensoren 5 und 6 zu erkennen. In der zweiten Gehäusekappe 7 sind zwei Langlochöffnungen 27 und 28 vorgesehen, welche so positioniert sind, dass sie in den Aufnahmen für die Halterungen der Drehwinkelsensoren 5 und 6 angeordnet sind, und die darunter angeordneten Drehwinkelgeber 15 und 16 freigelegt sind. Ferner sind die Langlochöffnungen 27 und 28 in den Aufnahmen der zweiten Gehäusekappe 7 mit ihren Längsachsen in Richtung der Einschubrichtung der Drehwinkelsensoren 5 und 6 ausgerichtet, so dass Fertigungsungenauigkeiten der Halterungen der Drehwinkelsensoren 5 und 6, der Aufnahmen in der zweiten Gehäusekappe 7, der Formgebung der zweiten Gehäusekappe 7 sowie der Befestigung der zweiten Gehäusekappe 7 nicht dazu führen, dass die Drehwinkelsensoren 5 und 6 und die Drehwinkelgeber 15 und 16 durch die Wandung der zweiten Gehäusekappe 7 voneinander getrennt sind.

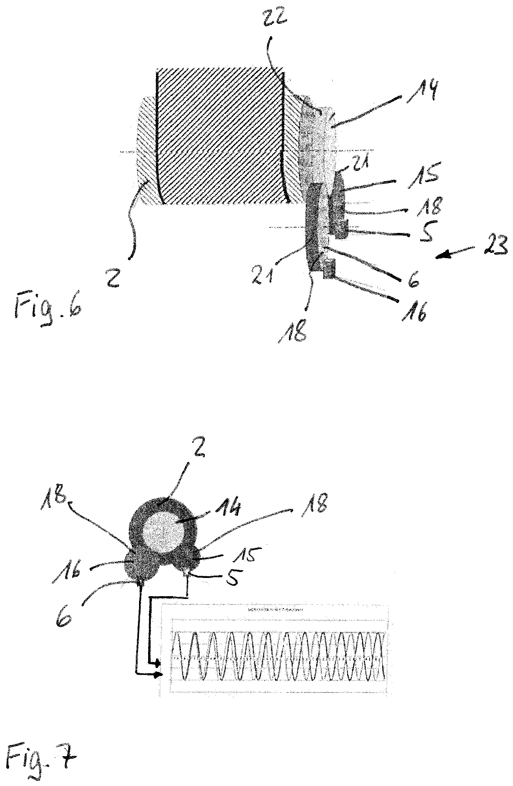

In der Figur 6 ist ein erfindungsgemäßer Gurtaufroller 1 nach einer zweiten Ausführungsform zu erkennen. Die Gurtwelle 2 ist hier drehfest mit einem Antriebszahnrad 14 verbunden, welches mit seiner Verzahnung 22 mit den Verzahnungen 21 zweier Abtriebszahnräder 18 kämmt. Die Abtriebszahnräder 18 haben einen unterschiedlichen Außendurchmesser mit einer unterschiedlichen Zähnezahl in den Verzahnungen 21, so dass sie von dem Antriebszahnrad 14 zu unterschiedlichen Drehzahlen angetrieben werden. Die Abtriebszahnräder 18 sind gleichzeitig Träger von Markierungen, Magneten oder dergleichen und wirken damit gleichzeitig als Drehwinkelgeber 15 und 16. Gegenüberliegend zu den Drehwinkelgebern 15 und 16 sind jeweils Drehwinkelsensoren 5 und 6 angeordnet, welche bei einer Drehbewegung der Gurtwelle 2 und der dadurch angetriebenen Abtriebszahnräder 18 die in der Figur 7 zu erkennenden Signale erzeugen. Das Untersetzungsgetriebe 23 ist hier durch die Drehverbindung des Antriebszahnrades 14 mit den Abtriebszahnrädern 18 verwirklicht, wobei die Abtriebszahnräder 18 hier auch mit einer grö-ßeren Drehzahl als das Antriebszahnrad 14 und die Gurtwelle 2 drehen können.

Das in der Darstellung linke Abtriebszahnrad 18 weist einen größeren Außendurchmesser mit einer größeren Zähnezahl in der Verzahnung 21 auf als das rechte Abtriebszahnrad 18 in seiner Verzahnung 21. Damit wird das linke Abtriebszahnrad 18 von dem Antriebszahnrad 14 zu einer Drehbewegung mit einer kleineren Drehzahl angetrieben als das rechte Abtriebszahnrad 18. Das linke Abtriebszahnrad 18 entspricht damit dem erfindungsgemä-ßen ersten Drehwinkelgeber 16 und das rechte Abtriebszahnrad 18 entspricht dem erfindungsgemäßen zweiten Drehwinkelgeber 15, welcher zu der größeren Drehzahl angetrieben wird. Damit erzeugen die beiden Drehwinkelsensoren 5 und 5 jeweils ein sinusförmiges Signal mit einer unterschiedlichen Frequenz bei der Drehbewegung der Gurtwelle 2. Diese unterschiedliche Frequenz führt zu einer sich ändernden Phasenverschiebung der Signale zueinander, welche eine höhere Auflösung der Ermittlung der Drehwinkelstellung der Gurtwelle 2 ermöglicht. Die absolute Auszugslänge des Gurtbandes kann dabei allein durch eine Auswertung einer der Signale der Drehwinkelsensoren 5 oder 6 unter Berücksichtigung des Untersetzungsverhältnisses ermittelt werden.

Grundsätzlich ist die Übertragung der Drehbewegung in dem Untersetzungsgetriebe 23 und insbesondere von dem Antriebszahnrad 14 auf das oder die Abtriebszahnräder 18 mit den Verzahnungen 21 und 22 beschrieben. Es ist aber ohne Weiteres möglich, die Drehbewegung auch allein über einen Reibschluss oder eine andere Art der Kraftübertragung zu übertragen, soweit nur die unterschiedlichen Drehzahlen des Antriebszahnrades 14 und der Abtriebszahnräder 18 während der Drehbewegung der Gurtwelle 2 verwirklicht sind.

## Patentansprüche

1. Gurtaufroller (1) mit einer Einrichtung zur Sensierung der Auszugslänge eines Sicherheitsgurtes, wobei
- der Gurtaufroller (1) einen fahrzeugfest befestigbaren Rahmen (3) und eine drehbar in dem Rahmen (3) gelagerte Gurtwelle (2) aufweist, auf welcher der Sicherheitsgurt aufwickelbar ist, und
- die Einrichtung zur Sensierung der Auszugslänge einen ersten Drehwinkelgeber (16) und einen ersten Drehwinkelsensor (6) aufweist, und
- ein Untersetzungsgetriebe (23) vorgesehen ist, welches die Drehbewegung der Gurtwelle (2) in eine Drehbewegung des ersten Drehwinkelgebers (16) mit einer kleineren Drehzahl untersetzt, und
- ein zweiter Drehwinkelgeber (15) und ein zweiter Drehwinkelsensor (5) vorgesehen sind, und
- der zweite Drehwinkelgeber (15) durch die Gurtwelle (2) zu einer in Bezug zu der Drehzahl des ersten Drehwinkelgebers (16) größeren Drehzahl angetrieben wird **dadurch gekennzeichnet, dass**
- der Gurtaufroller (1) eine an dem Rahmen (3) gehaltene erste Gehäusekappe (11) aufweist, und
- das Untersetzungsgetriebe (23) wenigstens ein an einem Lagerzapfen (24) der ersten Gehäusekappe (11) drehbar gelagertes Zahnrad aufweist, und
- eine zweite Gehäusekappe (7) vorgesehen ist, welche das Untersetzungsgetriebe (23) zur Außenseite hin abdeckt, und
- an der der erste und/oder der zweite Drehwinkelsensor (5,6) befestigt sind.

2. Gurtaufroller (1) nach Anspruch 1, **dadurch gekennzeichnet, dass**
- der zweite Drehwinkelgeber (15) an einem Zahnrad des Untersetzungsgetriebes (23) angeordnet ist.

3. Gurtaufroller (1) nach Anspruch 2, **dadurch gekennzeichnet, dass**
- das Zahnrad ein drehfest mit der Gurtwelle (2) verbundenes Antriebszahnrad (14) des Untersetzungsgetriebes (23) ist.

4. Gurtaufroller (1) nach einem der Ansprüche 1 bis 3,
**dadurch gekennzeichnet, dass**
- das Untersetzungsgetriebe (23) ein an dem Gurtaufroller (1) ortsfest angeordnetes, drehbar gelagertes Abtriebszahnrad (18) aufweist, und
- der erste Drehwinkelgeber (16) an dem Abtriebszahnrad (18) angeordnet ist.

5. Gurtaufroller (1) nach den Ansprüchen 3 und 4, **dadurch gekennzeichnet, dass**
- ein zwischen dem Antriebszahnrad (14) und dem Abtriebszahnrad (18) angeordnetes Zwischenzahnrad (17) vorgesehen ist, und
- das Zwischenzahnrad (17) durch ein zweistufiges Zahnrad mit zwei Verzahnungen (19,20) mit unterschiedlichen Durchmessern und einer unterschiedlichen Zähnezahl gebildet ist, welches mit der Verzahnung (19) mit der größeren Zähnezahl mit der Verzahnung (22) des Antriebszahnrades (14) und mit der Verzahnung (20) mit der kleineren Zähnezahl mit der Verzahnung (21) des Abtriebszahnrades (18) kämmt.

6. Gurtaufroller (1) nach einem der vorangegangenen Ansprüche, **dadurch gekennzeichnet, dass**
- die zweite Gehäusekappe (7) mindestens eine Öffnung aufweist, welche
- den ersten Drehwinkelgeber (16) und/oder den zweiten Drehwinkelgeber (15) freilegt und durch den ersten und/oder den zweiten Drehwinkelsensor (5,6) abgedeckt ist.

7. Gurtaufroller (1) nach Anspruch 6, **dadurch gekennzeichnet, dass**
- die Öffnung als Langlochöffnung (27,28) ausgebildet ist.

8. Gurtaufroller (1) nach einem der Ansprüche 1 bis 7,
**dadurch gekennzeichnet, dass**
- die zweite Gehäusekappe (7) an der ersten Gehäusekappe (11) oder an einem fest mit dieser verbundenem Teil befestigt ist.

9. Gurtaufroller (1) nach einem der Ansprüche 1 bis 8,
**dadurch gekennzeichnet, dass**
- das Untersetzungsgetriebe (23) die Drehbewegung der Gurtwelle (2) soweit untersetzt, dass der erste Drehwinkelgeber (16) von der Drehwinkelstellung der Gurtwelle (2) bei vollständig aufgewickeltem Sicherheitsgurt bis zu der Drehwinkelstellung der Gurtwelle (2) bei einem vollständig ausgezogenen Sicherheitsgurt um weniger als eine Umdrehung um seine Drehachse dreht.

10. Gurtaufroller (1) nach einem der Ansprüche 1 bis 9,
**dadurch gekennzeichnet, dass**
- das Untersetzungsgetriebe (23) ein Untersetzungsverhältnis von wenigstens 1:5 aufweist.

## Claims

1. Belt retractor (1) comprising a device for sensing the extension length of a seat belt,
- the belt retractor (1) having a frame (3), which can be rigidly attached to the vehicle, and a belt shaft (2), which is rotatably mounted in the frame (3) and onto which the seat belt can be wound, and
- the device for sensing the extension length comprising a first rotary angle encoder (16) and a first rotary angle sensor (6), and
- a reduction gear mechanism (23) being provided which reduces the rotary motion of the belt shaft (2) into a rotary motion of the first rotary angle encoder (16) at a lower rotational speed, and
- a second rotary angle encoder (15) and a second rotary angle sensor (5) being provided, and
- the second rotary angle encoder (15) being driven by the belt shaft (2) at a rotational speed greater than the rotational speed of the first rotary angle encoder (16), **characterized in that**
- the belt retractor (1) has a first housing cap (11) held on the frame (3), and
- the reduction gear mechanism (23) has at least one gear rotatably mounted on a bearing journal (24) of the first housing cap (11), and
- a second housing cap (7) is provided which covers the reduction gear mechanism (23) on the outside and
- to which the first and/or the second rotary angle sensor (5,6) are fastened.

2. Belt retractor (1) according to claim 1, **characterized in that**
- the second rotary angle encoder (15) is arranged on a gear of the reduction gear mechanism (23).

3. Belt retractor (1) according to claim 2, **characterized in that**
- the gear is a drive gear (14) of the reduction gear mechanism (23) and is connected to the belt shaft (2) for conjoint rotation therewith.

4. Belt retractor (1) according to any of claims 1 to 3, **characterized in that**
- the reduction gear mechanism (23) comprises a rotatably mounted output gear (18) fixed to the belt retractor (1), and
- the first rotary angle encoder (16) is arranged on the output gear (18).

5. Belt retractor (1) according to claims 3 and 4, **characterized in that**
- an intermediate gear (17) arranged between the drive gear (14) and the output gear (18) is provided, and
- the intermediate gear (17) is formed by a two-stage gear having two toothings (19,20) with different diameters and a different number of teeth and, using the toothing (19) with the larger number of teeth, meshes with the toothing (22) of the drive gear (14) and, using the toothing (20) with the smaller number of teeth, meshes with the toothing (21) of the output gear (18).

6. Belt retractor (1) according to any of the preceding claims,
**characterized in that**
- the second housing cap (7) has at least one opening which
- exposes the first rotary angle encoder (16) and/or the second rotary angle encoder (15) and is covered by the first and/or the second rotary angle sensor (5,6).

7. Belt retractor (1) according to claim 6, **characterized in that**
- the opening is designed as an elongated slot opening (27,28).

8. Belt retractor (1) according to any of claims 1 to 7, **characterized in that**
- the second housing cap (7) is fastened to the first housing cap (11) or to a part rigidly connected thereto.

9. Belt retractor (1) according to any of claims 1 to 8, **characterized in that**
- the reduction gear mechanism (23) reduces the rotary motion of the belt shaft (2) until the first rotary encoder (16) rotates by less than one revolution about its rotational axis from the rotary angle position of the belt shaft (2) when the seat belt is fully wound up to the rotary angle position of the belt shaft (2) when the seat belt is fully extended.

10. Belt retractor (1) according to any of claims 1 to 9, **characterized in that**
- the reduction gear mechanism (23) has a reduction ratio of at least 1:5.

## Revendications

1. Enrouleur de ceinture (1) comportant un dispositif pour la détection de la longueur d'extension d'une ceinture de sécurité, dans lequel
- l'enrouleur de ceinture (1) présente un cadre (3) pouvant être fixé de manière fixe au véhicule et un arbre de ceinture (2) monté de manière à pouvoir tourner dans le cadre (3) et sur lequel la ceinture de sécurité peut être enroulée, et
- le dispositif pour la détection de la longueur d'extension présente un premier codeur rotatif (16) et un premier capteur d'angle de rotation (6), et
- un démultiplicateur (23) est prévu, lequel démultiplie le mouvement de rotation de l'arbre de ceinture (2) en un mouvement de rotation du premier codeur rotatif (16) comportant une vitesse de rotation plus petite, et
- un second codeur rotatif (15) et un second capteur d'angle de rotation (5) sont prévus, et
- le second codeur rotatif (15) est entraîné par l'arbre de ceinture (2) à une vitesse de rotation supérieure par rapport à la vitesse de rotation du premier codeur rotatif (16), **caractérisé en ce que**
- l'enrouleur de ceinture (1) présente un premier capuchon de boîtier (11) maintenu sur le cadre (3), et
- le démultiplicateur (23) présente au moins une roue dentée montée de manière à pouvoir tourner sur un tourillon (24) du premier capuchon de boîtier (11), et
- un second capuchon de boîtier (7) est prévu, lequel recouvre le démultiplicateur (23) vers le côté extérieur, et
- sur lequel sont fixés le premier et/ou le second capteur d'angle de rotation (5, 6).

2. Enrouleur de ceinture (1) selon la revendication 1, **caractérisé en ce que**
- le second codeur rotatif (15) est disposé sur une roue dentée du démultiplicateur (23).

3. Enrouleur de ceinture (1) selon la revendication 2, **caractérisé en ce que**
- la roue dentée est une roue dentée d'entraînement (14) du démultiplicateur (23), reliée de manière solidaire en rotation à l'arbre de ceinture (2).

4. Enrouleur de ceinture (1) selon l'une des revendications 1 à 3,
**caractérisé en ce que**
- le démultiplicateur (23) présente une roue dentée de sortie (18) montée de manière à pouvoir tourner et disposée de manière fixe sur l'enrouleur de ceinture (1), et
- le premier codeur rotatif (16) est disposé sur la roue dentée de sortie (18).

5. Enrouleur de ceinture (1) selon les revendications 3 et 4,
**caractérisé en ce que**
- une roue dentée intermédiaire (17) disposée entre la roue dentée d'entraînement (14) et la roue dentée de sortie (18) est prévue, et
- la roue dentée intermédiaire (17) est formée par une roue dentée à deux étages comportant deux dentures (19, 20) comportant des diamètres différents et un nombre de dents différent, laquelle engrène avec la denture (19) comportant le plus grand nombre de dents avec la denture (22) de la roue dentée d'entraînement (14) et avec la denture (20) comportant le plus petit nombre de dents avec la denture (21) de la roue dentée de sortie (18).

6. Enrouleur de ceinture (1) selon l'une des revendications précédentes,
**caractérisé en ce que**
- le second capuchon de boîtier (7) présente au moins une ouverture, laquelle
- dégage le premier codeur rotatif (16) et/ou le second codeur rotatif (15) et est recouverte par le premier et/ou le second capteur d'angle de rotation (5, 6).

7. Enrouleur de ceinture (1) selon la revendication 6, **caractérisé en ce que**
- l'ouverture est réalisée sous forme d'ouverture oblongue (27, 28).

8. Enrouleur de ceinture (1) selon l'une des revendications 1 à 7,
**caractérisé en ce que**
- le second capuchon de boîtier (7) est fixé au premier capuchon de boîtier (11) ou est fixé de manière fixe à une partie reliée de celui-ci.

9. Enrouleur de ceinture (1) selon l'une des revendications 1 à 8,
**caractérisé en ce que**
- le démultiplicateur (23) démultiplie le mouvement de rotation de l'arbre de ceinture (2) dans une mesure telle que le premier codeur rotatif (16) tourne de moins d'un tour autour de son axe de rotation depuis la position d'angle de rotation de l'arbre de ceinture (2) lorsque la ceinture de sécurité est complètement enroulée jusqu'à la position d'angle de rotation de l'arbre de ceinture (2) lorsque la ceinture de sécurité est complètement étendue.

10. Enrouleur de ceinture (1) selon l'une des revendications 1 à 9,
**caractérisé en ce que**
- le démultiplicateur (23) présente un rapport de démultiplication d'au moins 1:5.
